# FASCICULE DE BREVET EUROPEEN

(11) **EP 0 434 510 B1**
(45) Date de publication et mention de la délivrance du brevet: **05.04.1995**
(21) Numéro de dépôt: 90403564.9
(22) Date de dépôt: 13.12.1990
(51) Int. Cl.: B01D 3/22, B01J 19/30

(54) **Sous-ensemble de distribution de matière et d'échange de chaleur et de matière pour colonne notamment à garnissage, et colonne munie d'un tel sous-ensemble**
Anordnung zur Stoffverteilung sowie zum Wärme- und Stoffaustausch für eine Kolonne, insbesondere mit Füllkörper und Kolonne mit einer solchen Anordnung
Arrangement for mass distribution and heat and mass transfer for a column, especially with packings and column with such an arrangement

(30) Priorité: 14.12.1989 FR 8916570
(43) Date de publication de la demande: 26.06.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Alleaume, Jean-François, F-76100 Rouen (FR); Andre, Patrice, F-91120 Palaiseau (FR); Barbe, Christian, F-92260 Fontenay Aux Roses (FR); Darchis, François, Oakland, California 94618 (US); Jeannot, Jean-Pierre, F-94100 Saint Maur des Fosses (FR); Lehman, Jean-Yves, F-94700 Maisons Alfort (FR); Leprince-Ringuet, Christian, Wilmington, Delaware 19810 (US)
(74) Mandataire: Le Moenner, Gabriel

(56) Documents cités:
- WO-A-89/10527
- GB-A- 2 046 623
- US-A- 3 070 360

## Description

La présente invention est relative à un sous-ensemble de distribution et d'échange de chaleur et de matière comprenant un distributeur de fluides pour colonne d'échange de chaleur et de matière, plus particulièrement du type à garnissages, et notamment aux colonnes de distillation d'air, du genre comprenant une série d'éléments profilés parallèles adjacents définissant des espaces alternés de gaz et de liquide, chaque élément profilé comportant au moins une portion de paroi inférieure horizontale munie d'une rangée de trous et au moins une portion de paroi dressée munie d'une rangée d'ouvertures.

Un distributeur de ce type est décrit dans le document GB-A-2 046 623, où le distributeur est recouvert d'un garnissage non organisé constitué d'éléments en vrac.

L'utilisation dans les colonnes de distillation de garnissages organisés, du type ondulé croisé, tel que décrit dans le document WO 89/10527 au nom de la Demanderesse et dont le contenu est supposé intégré ici pour référence, présente des avantages importants, notamment du point de vue de la perte de charge du gaz montant. Cependant, elle a été limitée jusqu'à présent par la difficulté que représente la nécessite de distribuer uniformément le liquide au sommet de chaque tronçon de garnissage.

Dans les colonnes de grand diamètre, les garnissages du type "ondulé-croisé" ne sont pas auto-portants. Il faut donc, pour chaque tronçon de colonne, non seulement recueillir le liquide qui tombe du tronçon de garnissage superieur, distribuer ce liquide uniformément sur le tronçon de garnissage inférieur, et favoriser, sans perte de charge excessive, une bonne repartition du gaz montant, mais encore supporter le tronçon de garnissage supérieur sur toute sa surface et donner un appui supérieur au tronçon de garnissage inférieur.

Ce problème complexe n'a pas été résolu jusqu'à présent de façon entièrement satisfaisante : dans les solutions proposées, une ou plusieurs des fonctions ci-dessus étaient remplies imparfaitement, et/ou l'encombrement vertical résultant était excessif.

L'invention a pour but de fournir un sous-ensemble de distribution et d'échange de chaleur et de matière comprenant un distributeur de structure très rigide et peu encombrante, capable de distribuer uniformément le liquide tout en procurant une bonne répartition du gaz.

A cet effet, le sous-ensemble de distribution suivant l'invention est caractérisé en ce que chaque élément profilé du distributeur présente une section générale en forme de U, avec un fond raccordé à des ailes sensiblement verticales comportant chacune une partie terminale s'écartant vers l'extérieur et se raccordant avec une partie terminale de l'aile d'un élément profilé adjacent pour définir un des espaces de gaz, la rangée d'ouvertures de passages de gaz étant formée dans la partie supérieure de l'aile à distance, verticalement du fond, les éléments profilés étant fixés par les extrémités de leurs fonds à une couronne périphérique.

Suivant des caractéristiques avantageuses :
- le distributeur comporte, dans chaque espace de liquide, au moins une cheminée de trop-plein ayant une extrémité supérieure à un niveau inférieur à celui du bord inférieur des ouvertures ;
- les espaces de gaz sont partiellement obturés à leurs extrémités opposées par des plaques.

L'invention a également pour objet une colonne d'échange de chaleur et de matière comprenant au moins un sous-ensemble de distribution tel que défini ci-dessus, supporté dans la colonne par la couronne périphérique du distributeur.

Un exemple de réalisation de l'invention va maintenant être décrit en regard des dessins annexés, sur lesquels :
- la figure 1 représente en perspective, avec arrachement partiel, à un distributeur de fluides conforme à l'invention ;
- la figure 2 est une vue partielle de dessus du distributeur de la figure 1 ;
- la figure 3 en est une coupe transversale partielle en élévation, prise suivant la ligne III-III de la figure 2 ; et
- la figure 4 représente schématiquement à plus petite échelle, en coupe longitudinale, une partie d'une colonne de distillation d'air équipée de tels distributeurs ;
- la figure 5 est une vue schématique en coupe verticale d'une variante du distributeur suivant l'invention ;
- la figure 6 est une vue partielle prise en coupe suivant la ligne VI-VI de la figure 5 ;
- les figures 7 et 8 sont des vues analogues à la figure 5 de deux autres variantes ;
- la figure 9 est une vue, prise en coupe horizontale suivant la ligne IX-IX de la figure 10 ou de la figure 11, d'une autre variante du distributeur suivant l'invention ; et
- les figures 10 et 11 sont des vues prises en coupe, respectivement, suivant les lignes X-X et XI-XI de la figure 9.

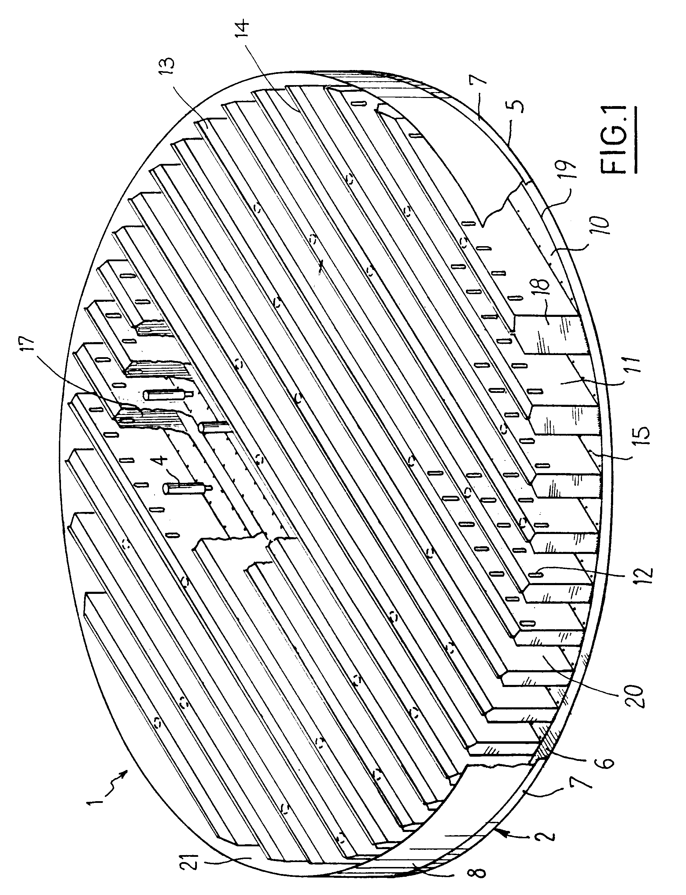

Le distributeur 1 représenté aux figures 1 à 3 est constitué d'une couronne périphérique 2, d'une série de profilés en U 3 et d'une série de cheminées de trop-plein 4.

La couronne 2 comprend elle-même un profilé périphérique circulaire 5 à section en L comportant une aile horizontale inférieure 6 et une bordure extérieure 7 dirigée vers le haut. Sur cette dernière est fixée hermétiquement une jupe cylindrique 8 en saillie vers le haut.

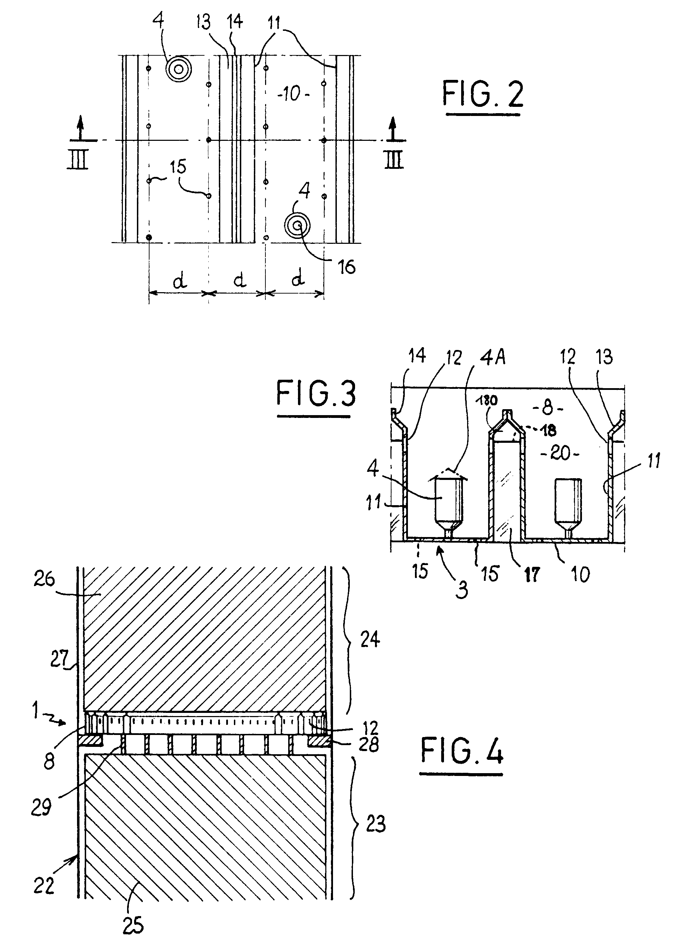

Chaque profilé 3 (figures 2 et 3) est constitué d'un fond horizontal perforé 10 bordé par deux parois verticales parallèles 11. Chaque paroi 11 comporte, le long de son bord supérieur, une rangée horizontale d'orifices oblongs 12 à grand axe vertical, les orifices d'une paroi 11 étant décalés d'un demi-pas par rapport à ceux de la paroi 11 opposée.

Chaque paroi 11 se prolonge en oblique vers le haut et vers l'extérieur du profilé 3 en un demi-toit 13 qui se termine par une étroite bordure verticale 14 dirigée vers le haut.

Les profilés 3 sont disposés côte à côte, de sorte que leurs demi-toits 13 se rejoignent, les bordures 14 adjacentes s'appliquant l'une contre l'autre sur toute leur longueur et étant fixées ensemble par des moyens appropriés (non représentés) étanches au liquide mais non nécessairement étanches au gaz, par exemple par des points de soudure ou par agrafage.

Chaque fond 10 comporte une rangée de trous 15 le long de chaque paroi 11. Les deux rangées sont décalées d'un demi-pas l'une par rapport à l'autre, et le dimensionnement du demi-toit 13 est tel que, en vue en plan (figure 2), la distance d entre les rangées de trous est la même, que ces rangées appartiennent au même profilé 3 ou à deux profilés adjacents. On obtient ainsi sur toute la surface du distributeur un maillage régulier des trous 15, en vue en plan, avec une maille en forme de losange.

De plus, chaque fond 10 comporte dans son plan longitudinal médian, à des intervalles réguliers nettement supérieurs au pas des trous 15, un orifice 16 de plus grand diamètre dans lequel s'emboîte l'extrémité inférieure étroite d'une cheminée 4. Ces cheminées ont la forme d'un entonnoir qui s'élève jusqu'à un niveau légèrement inférieur à celui du bord inférieur des ouvertures 12. Un chapeau chinois conique 4A, représenté en trait mixte sur la figure 3, peut surmonter chaque cheminée 4.

Chaque profilé 3 est coupé à longueur, transversalement ou obliquement, de façon à s'appuyer par chaque extrémité sur l'aile 6 de la couronne 2. Chaque extrémité de chaque espace de gaz 17 défini entre deux profilés adjacents est obturée hermétiquement, au moins jusqu'au niveau du bord inférieur des orifices oblongs 12, par une plaquette verticale 18 de forme correspondante, soudée le long de ses bords latéraux, dont le bord inférieur affleure la face inférieure des fonds 10 et dont le bord supérieur définit un passage de gaz d'extrémité 180.

Les bords inférieurs des plaquettes 18 et les extrémités des fonds 10 sont soudés sur l'aile 6 par une soudure continue hermétique 19.

Ainsi, le distributeur définit un certain nombre d'espaces 20 de collection de liquide délimités par un fond 10 et les deux parois verticales 11 du même profilé, ces espaces 20 alternant avec les espaces de gaz 17 précités, qui sont des espaces de passage de gaz. Le distributeur définit également un canal périphérique 21, délimité par la bordure 7 et la jupe 8 de la couronne 1 et communiquant avec l'ensemble des espaces 20.

Le distributeur 1 est destiné à être monté dans une colonne 22 d'échange de chaleur et de matière (figure 4), par exemple une colonne de distillation d'air, du type à garnissage organisé, notamment à garnissage ondulé-croisé, tel que décrit dans le document WO 89/10527 sus-mentionné. Une colonne de ce type est divisée en un certain nombre de tronçons 23, 24 dont chacun est équipé d'un tronçon (ou pack) de garnissage 25, 26 respectivement. Dans le cas d'un garnissage ondulé-croisé, chaque pack comprend un empilement de plaques verticales ondulées en oblique, les ondes des lamelles adjacentes étant inclinées en sens opposés.

Au dessus de chaque pack, la virole 27 de la colonne est munie intérieurement d'appuis 28 sur lesquels est posée la couronne 2 d'un distributeur 1 ; le pack immédiatement supérieur est posé directement sur la surface d'appui horizontale formée par l'ensemble des tranches d'extrémité des bordures 14 des profilés 3 et éventuellement par la jupe 8 de la couronne 2, ce qui est permis par la grande rigidité de la structure en poutre multiple du distributeur.

Les plaques parallèles de garnissage du pack sont orientées perpendiculairement aux profilés 3 du distributeur supportant le pack. Les plaques de garnissage de deux tronçons de garnissage superposés adjacents 25 et 26 peuvent être parallèles entre elles:

Des entretoises 29 sont disposées entre le pack 25 et les fonds 10 du distributeur 1. Cette structure en poutre multiple empêche ainsi toute déformation vers le haut du pack inférieur 25 en cas de poussée ascendante s'exerçant sur ce dernier. Les entretoises 29 sont constituées avantageusement d'éléments de plaques alignées, fixés sur les fonds 10 des éléments profilés 3, parallèlement à ceux-ci, en alternance avec les trous 15. Les entretoises 29 contribuent ainsi à répartir uniformément les gaz ascendants. Des moyens d'étanchéité appropriés (non représentés) sont bien entendu prévus dans la colonne.

En fonctionnement, le liquide tombe de toute la surface du pack supérieur 26 et est recueilli dans les espaces de liquide 20 et dans le canal 21, lequel assure une égalisation du niveau du liquide dans tous les espaces 20. Le liquide est ensuite distribué uniformément au pack inférieur 25 grâce au maillage régulier des trous 15.

En même temps, le gaz montant pénètre dans les espaces de gaz 17 et en sort par les orifices 12 au-dessus du niveau du liquide. En fonction des diamètres relatifs du distributeur et du pack supérieur 26, on peut être amené :
- soit à laisser du gaz sortir aux extrémités des espaces 17, en limitant la hauteur des plaquettes 18, comme indiqué en trait mixte à la figure 3 ;
- soit à obturer complètement les extrémités des espaces 17 au moyen de ces plaquettes ;
- soit non seulement à effectuer cette obturation, mais également à supprimer les orifices 12 voisins des extrémités des profilés 3.

Le gaz est ainsi, lui aussi, réparti à peu près uniformément sur toute la section de la colonne, sans perte de charge excessive au passage du distributeur. Grâce au fait que les ouvertures 12 sont prévues dans les parois verticales 11, et également grâce à leur forme oblongue, ces ouvertures offrent une aire totale étendue au passage du gaz, sans gêner la chute du liquide sur toute la surface du distributeur et sans réduire de façon importante l'inertie mécanique des parois 11.

En cas de dépassement accidentel de la capacité du distributeur, le niveau du liquide monte jusqu'au sommet des cheminées 4, lesquelles assurent alors une distribution macroscopique régulière du liquide sur toute la surface du pack inférieur et, surtout, évitent ainsi toute perturbation de l'écoulement du gaz à travers les orifices 12.

Il est à noter que le distributeur prévu au-dessus du pack le plus élevé de la colonne peut être réalisé en supprimant les demi-toits 13 et, par suite, les orifices 12, à condition que la colonne comporte des moyens d'alimentation de liquide, en tête de colonne, directement dans le canal 21. L'ensemble des parois verticales 11 confère néanmoins au distributeur une très grande rigidité qui le rend auto-porteur, même pour des grands diamètres de colonnes, de l'ordre de plusieurs mètres.

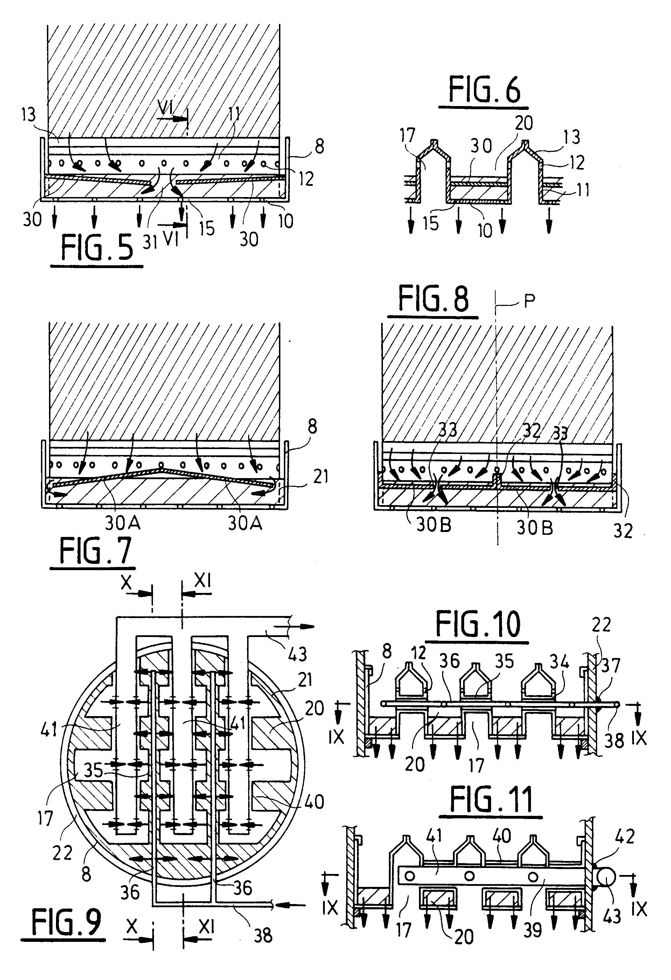

Avec certains types de garnissages, la composition du liquide est quelque peu hétérogène sur la section du pack, du fait d'une redistribution imparfaite du liquide descendant le long du pack et des "effets de bord". Si cette hétérogénéité risque d'avoir des conséquences à un niveau donné de la colonne, on peut utiliser l'une des variantes représentées aux figures 5-6, 7 et 8.

Dans la variante des figures 5 et 6, deux plaquettes 30 sont fixées dans chaque espace de liquide 20. Chaque plaquette 30 a la même largeur que l'espace 20. Elle part de l'extrémité correspondante de cet espace 20 (et en pratique de la jupe 8) et descend en pente douce vers le milieu de cet espace. Ainsi, chaque paire de plaquettes 30 forme un V très ouvert, en laissant entre elles une ouverture libre 31.

En fonctionnement, comme indiqué par les flèches de la figure 5, tout le liquide tombant du pack supérieur parvient d'abord sur les plaquettes 30 puis est rassemblé au milieu des espaces 20 puis, après avoir traversé les ouvertures 31, se redistribue le long de ceux-ci. Ainsi, tout le liquide est homogénéisé et c'est un liquide de composition pratiquement uniforme qui tombe sur toute la surface du pack inférieur à travers les trous 15.

Comme indiqué sur la figure 7, les deux plaquettes 30 peuvent être remplacées par des plaquettes 30A formant un toit très évasé, réunies à mi-longueur de l'espace 20 et se terminant à chaque extrémité de ces espaces, à une petite distance de la jupe 8. Ainsi, comme indiqué par les flèches, le liquide tombant du pack supérieur se partage en deux courants dirigés jusque dans le canal périphérique 21, puis se redistribue sur toute la longueur des espaces 20.

La figure 8 montre encore une autre manière d'homogénéiser le liquide dans le distributeur : les plaquettes 30 de la figure 5 sont remplacées par quatre plaquettes 30B. Chaque plaquette 30B est horizontale et présente à une extrémité un rebord vertical 32 dirigé vers le haut. Les deux plaquettes intermédiaires ont leurs rebords 32 accolés, au milieu de la longueur de l'espace 20. Les deux autres plaquettes ont leurs rebords 32 adjacents à la jupe 8. Dans chaque demi-espace 20, les deux plaquettes laissent entre leurs extrémités dépourvues de rebord une ouverture libre 33. Ainsi, comme indiqué par les flèches, le liquide tombant du pack supérieur se rassemble de chaque côté du plan de symétrie transversal P du distributeur, et chaque courant passe par une ouverture 33 et se redistribue sur le demi-espace 20 correspondant.

Une autre variante (non représentée) consiste à rendre solidaire de chaque aile 11 une demi-plaquette de canalisation du liquide, de forme longitudinale appropriée, ne s'étendant que sur la moitié de la largeur d'un espace 20 et pourvue d'un rebord sur toute sa longueur. Par exemple, les demi-plaquettes d'un même espace 20 peuvent avoir des inclinaisons longitudinales opposées.

Dans chacune des variantes des figures 5-6, 7 et 8, les plaquettes 30, 30A, 30B peuvent être partiellement ou totalement immergées dans le liquide contenu dans les espaces 20, ou bien totalement émergées.

Par ailleurs, à la place de ces plaquettes ou en supplément, des barrières verticales transversales (non représentées) peuvent être implantées en des emplacements judicieusement choisis dans les espaces 20 et/ou dans le canal 21. Ainsi, en cas de déséquilibre accidentel du débit de liquide filtrant à travers les trous 15, ces barrières forcent le liquide à circuler et à tendre à égaliser son niveau.

Les figures 9 à 11 montrent comment du gaz peut être soutiré et du liquide ajouté dans la colonne de distillation au niveau d'un distributeur. On comprendra que la même disposition permet d'ajouter du gaz et de soutirer du liquide. Pour la clarté du dessin, on a supposé que le distributeur ne comprend que trois espaces de gaz 17.

A des intervalles réguliers, les parois 11 sont percées, au-dessus des trous 12, d'orifices 34 alignés et réunis de façon étanche, à travers les espaces 17, par des tronçons tubulaires 35 (figure 10). Les espaces de liquide 20 sont ainsi mis en communication mutuelle à travers ces tronçons 35. Un tube transversal perforé 36 traversant à joint étanche la virole 22 de la colonne, à laquelle il est fixé par un cordon de soudure 37, traverse librement chaque alignement de tronçons 35. A l'extérieur de la virole 22, tous les tubes 36 sont reliés à un collecteur 38 d'amenée de liquide, tandis qu'ils sont obturés à leur extrémité opposée.

De même, à des intervalles réguliers alternés avec les précédents, les parois 11 sont percées, au-dessous des trous 12, d'autres orifices 39 alignés et réunis de façon étanche, à travers les espaces 20, par des tronçons tubulaires 40 (figure 11). Les espaces 17 sont ainsi mis en communication mutuelle à travers ces tronçons 40. Un tube transversal perforé 41, traversant à joint étanche la virole 22 de la colonne à l'opposé des tubes 36, traverse librement chaque alignement de tronçons 40. Les tubes 41 sont fixés à la virole 22 par un cordon de soudure 42. A l'extérieur de la virole 22, tous les tubes 41 sont reliés à un collecteur 43 de soutirage de gaz, tandis qu'ils sont obturés à leur extrémité opposée.

Grâce à l'agencement en "double rateau" représenté aux figures 9 à 11, les entrées/sorties de liquide et de gaz peuvent se faire au niveau de chaque distributeur sans supplément de hauteur pour la colonne. De plus, cet agencement confère beaucoup de souplesse de fonctionnement au distributeur.

## Revendications

1. Sous-ensemble de distribution de matière et d'échange de chaleur et de matière pour une colonne d'échange de chaleur et de matière, comprenant une première structure (26) d'échange de chaleur et de matière entre un gaz ascendant et un liquide descendant supportée par un distributeur de fluides (1) comportant une série d'éléments profilés parallèles (3) adjacents définissant des espaces alternés de gaz (17) et de liquide (20), chaque élément profilé comportant au moins une portion de paroi inférieure horizontale (10) munie d'au moins une rangée de trous (15) de distribution de liquide et au moins une portion de paroi dressée (11) munie d'une rangée d'ouvertures (12) de passage de gaz, caractérisé en ce que chaque élément profilé (3) du distributeur (1) présente une section générale en formle de U, avec un fond (1O) raccordé à des ailes sensiblement verticales (11) comportant chacune une partie terminale (13) s'écartant vers l'extérieur et se raccordant avec une partie terminale de l'aile d'un élément profilé adjacent pour définir un des espaces de gaz (17), la rangée d'ouvertures de passages de gaz (12) étant formée dans la partie supérieure de l'aile (11) à distance, verticalement, du fond (10), les éléments profilés (3) étant fixés par les extrémités de leurs fonds (10) à une couronne périphérique (2).

2. Sous-ensemble selon la revendication 1, caractérisé en ce que le distributeur (1) comporte, dans chaque espace de liquide (20), au moins une cheminée de trop-plein (4) ayant une extrémité supérieure à un niveau inférieur à celui du bord inférieur des ouvertures (12).

3. Sous-ensemble selon la revendication 1 ou la revendication 2, caractérisé en ce que les espaces de gaz (17) sont partiellement obturés à leurs extrémités opposées par des plaques verticales (18) ménageant un passage de gaz supérieur (180).

4. Sous-ensemble selon l'une des revendications 1 à 3, caractérisé en ce que le fond (10) de chaque élément profilé (3) comporte deux rangées parallèles de trous (15), l'ensemble des trous (15) du distributeur formant un maillage régulier en losange.

5. Sous-ensemble selon l'une des revendications 1 à 4, caractérisé en ce que les ouvertures (12) sont allongées verticalement.

6. Sous-ensemble selon l'une des revendications 1 à 5, caractérisé en ce que les ouvertures (12) dans deux ailes (11) adjacentes sont décalées les unes des autres.

7. Sous-ensemble selon l'une des revendications 1 à 6, caractérisé en ce qu'il comprend une jupe cylindrique périphérique s'étendant vers le haut (8) montée hermétiquement sur la couronne périphérique (2) du distributeur (1) et délimitant un canal périphérique (21) communiquant avec tous les espaces de liquides (20).

8. Sous-ensemble selon l'une des revendications 1 à 7, caractérisé en ce que le distributeur (1) comporte, dans chaque espace de liquide (20), une ou deux paires de plaquettes (30 ; 30A ; 30B) de redistribution le long de cet espace du liquide qui arrive sur le distributeur.

9. Sous-ensemble selon l'une des revendications 1 à 8, caractérisé en ce que les ailes sensiblement verticales (11) comportent des rangées d'orifices alignés (34, 39) reliées à joint étanche par des tronçons tubulaires (35, 40), lesquels sont traversés par des tubes perforés (36, 41) d'entrée ou de sortie de liquide et/ou de gaz, les tubes d'une même catégorie étant reliés à une extrémité par un collecteur (38, 43).

10. Sous-ensemble selon l'une des revendications 1 à 9, caractérisé en ce que la première structure d'échange de chaleur et de matière (26) est constitué d'un tronçon de garnissage organisé (26) supporté directement par les parties terminales (13) des ailes (11) des éléments profilés (3) du distributeur (1).

11. Sous-ensemble selon la revendication 10, caractérisé en ce que la première structure d'échange de chaleur et de matière (26) est constituée d'un tronçon de garnissage du type ondulé-croisé.

12. Sous-ensemble selon la revendication 11, caractérisé en ce que les plaques du premier tronçon de garnissage (26) sont orientées perpendiculairement aux éléments profilés (3) du distributeur (1).

13. Colonne d'échange de chaleur et de matière, caractérisée en ce qu'elle comprend au moins un sous-ensemble (1, 26) selon l'une des revendications 1 à 12, supporté dans la colonne par la couronne périphérique (2) du distributeur (1).

14. Colonne selon la revendication 13, caractérisée en ce qu'elle comprend au moins un second tronçon de garnissage (25) disposé au-dessous du sous-ensemble (1, 26), des entretoises (29) étant disposées entre le distributeur (1) et le second tronçon de garnissage adjacent (25).

15. Colonne selon la revendication 14, caractérisée en ce que le second tronçon de garnissage (25) est du type ondulé-croisé.

16. Colonne selon la revendication 14 ou la revendication 15, caractérisée en ce que les entretoises (29) sont constituées d'éléments de plaques alignés fixés sur les fonds (10) des éléments profilés (3) du distributeur (1).

17. Utilisation d'une colonne selon l'une des revendications 13 à 16, pour la distillation de l'air.

## Claims

1. Subassembly for distributing matter and exchanging heat and matter for a heat and matter exchange column, comprising a first structure (26) for exchanging heat and matter between a rising gas and a descending liquid, supported by a fluid distributor (1) including a series of adjacent parallel profiled elements (3) defining alternating spaces for gas (17) and liquid (20), each profiled element having at least one horizontal bottom wall portion (10) provided with at least one row of holes (15) for distributing liquid and at least one upright wall portion (11) provided with a row of openings (12) for gas to pass, characterised in that each profiled element (3) of the distributor (1) has a U-shaped cross section overall, with a base (10) connected to substantially vertical sides (11) each having an end part (13) sloping away towards the outside and connected to an end part of the side of an adjacent profiled element in order to define one of the gas spaces (17), the row of gas passage openings (12) being formed in the top part of the side (11) at a distance, vertically, from the base (10), the profiled elements (3) being fixed by the ends of their bases (10) to a peripheral ring (2).

2. Subassembly according to Claim 1, characterised in that the distributor (1) has, in each liquid space (20), at least one overflow vent (4) having a top end at a level lower than that of the bottom edge of the openings (12).

3. Subassembly according to Claim 1 or Claim 2, characterised in that the gas spaces (17) are partially closed off at their opposite ends by vertical plates (18) forming a top gas passage (180).

4. Subassembly according to one of Claims 1 to 3, characterised in that the base (10) of each profiled element (3) includes two parallel rows of holes (15), all the holes (15) in the distributor forming a regular diamond-shaped grid.

5. Subassembly according to one of Claims 1 to 4, characterised in that the openings (12) are vertically elongate.

6. Subassembly according to one of Claims 1 to 5, characterised in that the openings (12) in two adjacent sides (11) are offset from each other.

7. Subassembly according to one of Claims 1 to 6, characterised in that it comprises a peripheral cylindrical skirt extending upwards (8) and mounted on the peripheral ring (2) of the distributor (1) so as to form a seal and defining a peripheral channel (21) communicating with all the liquid spaces (20).

8. Subassembly according to one of Claims 1 to 7, characterised in that the distributor (1) has, in each liquid space (20), one or two pairs of sheets (30; 30A; 30B) for redistributing, along this space, the liquid which arrives in the distributor.

9. Subassembly according to one of Claims 1 to 8, characterised in that the substantially vertical sides (11) include rows of aligned orifices (34, 39) connected, with sealed joints, by tubular sections (35, 40), through which pass perforated tubes (36, 41) for liquid and/or gas to enter or leave, the tubes in the same category being connected at one end by a manifold (38, 43).

10. Subassembly according to one of Claims 1 to 9, characterised in that the first heat and matter exchange structure (26) consists of a section of structured filling (26) supported directly by the end parts (13) of the sides (11) of the profiled elements (3) of the distributor (1).

11. Subassembly according to Claim 10, characterised in that the first heat and matter exchange structure (26) consists of a section of filling of the interlaced corrugated type.

12. Subassembly according to Claim 11, characterised in that the plates of the first section of filling (26) are oriented perpendicularly to the profiled element (3) of the distributor (1).

13. Heat and matter exchange column, characterised in that it comprises at least one subassembly (1, 26) according to one of Claims 1 to 12, supported in the column by the peripheral ring (2) of the distributor (1).

14. Column according to Claim 13, characterised in that it comprises at least a second section of filling (25) disposed underneath the subassembly (1, 26), spacers (29) being disposed between the distributor (1) and the second adjacent section of filling (25).

15. Column according to Claim 14, characterised in that the second section of filling (25) is of the interlaced corrugated type.

16. Column according to Claim 14 or Claim 15, characterised in that the spacers (29) consist of aligned plate elements fixed to the bases (10) of the profiled elements (3) of the distributor (1).

17. Use of a column according to one of Claims 13 to 16 for the distillation of air.

## Patentansprüche

1. Anordnung zur Stoffverteilung sowie zum Wärme- und Stoffaustausch für eine Wärme- und Stoffaustauschsäule mit einer ersten Wärme- und Stoffaustauschstruktur (26) zwischen einem aufsteigendem Gas und einer absteigenden Flüssigkeit, welche von einem Fluidverteiler (1) getragen wird, der eine Folge nebeneinanderliegender, paralleler Profilelemente (3) umfaßt, die abwechselnde Gas- und Flüssigkeitsräume (17, 20) festlegen, wobei jedes Profilelement mindestens einen horizontalen, unteren Wandabschnitt (10), der mit einer Reihe Flüssigkeitsverteilungslöcher (15) versehen ist, und mindestens einen aufrecht stehenden Wandabschnitt (11), der mit einer Reihe Gasdurchtrittsöffnungen (12) versehen ist, aufweist, **dadurch gekennzeichnet**, daß jedes Profilelement (3) des Verteilers (1) einen im wesentlichen, U-förmigen Querschnitt hat, und zwar mit einem Boden (10), der mit im wesentlichen vertikalen Rippen (11) verbunden ist, die jeweils einen sich nach außen hin erstreckenden Endabschnitt (13) aufweisen und mit einem Endabschnitt der Rippe eines benachbarten Profilelements verbunden sind, um einen der Gasräume (17) festzulegen, wobei die Reihe Gasdurchtrittsöffnungen (12) in dem oberen Teil der Rippe (11), von dem Boden (10) vertikal beabstandet, ausgebildet ist und die Profilelemente (3) über die Enden ihrer Böden (10) an einer Randeinfassung (2) befestigt sind.

2. Anordnung nach Anspruch 1, **dadurch gekennzeichnet**, daß der Verteiler (1) in jedem Flüssigkeitsraum (20) mindestens eine Überlaufleitung (4) aufweist, die ein oberes Ende auf einer Höhe unterhalb derjenigen des unteren Randes der Öffnungen (12) hat.

3. Anordnung nach Anspruch 1 oder 2, **dadurch gekennzeichnet**, daß die Gasräume (17) an ihren gegenüberliegenden Enden durch vertikale Platten (18) teilweise abgedeckt sind, die einen oberen Gasdurchtritt (180) aussparen.

4. Anordnung nach einem de Ansprüche 1 bis 3, **dadurch gekennzeichnet**, daß der Boden (10) jedes Profilelements (3) zwei parallele Reihen Löcher (15) aufweist, wobei die Gesamtheit der Löcher (15) des Verteilers ein regelmäßiges, rautenförmiges Netzwerk bildet.

5. Anordnung nach einem der Ansprüche 1 bis 4, **dadurch gekennzeichnet**, daß die Öffnungen (12) vertikal länglich sind.

6. Anordnung nach einem der Ansprüche 1 bis 5, **dadurch gekennzeichnet**, daß die Öffnungen (12) in zwei benachbarten Rippen (11) zueinander versetzt sind.

7. Anordnung nach einem der Ansprüche 1 bis 6, **dadurch gekennzeichnet**, daß sie eine sich nach oben erstreckende, periphere, zylindrische Schütze (8) aufweist, die hermetisch auf der Randeinfassung (2) des Verteilers (1) montiert ist und einen peripheren Kanal (21) begrenzt, der mit allen Flüssigkeitsräumen (20) in Verbindung steht.

8. Anordnung nach einem der Ansprüche 1 bis 7, **dadurch gekennzeichnet**, daß der Verteiler (1) in jedem Flüssigkeitsraum (20) ein oder zwei Plattenpaare (30; 30A; 30B) zur Umverteilung der über den Verteiler ankommenden Flüssigkeit entlang dieses Raumes aufweist.

9. Anordnung nach einem der Ansprüche 1 bis 8, **dadurch gekennzeichnet**, daß die im wesentlichen vertikalen Rippen (11) Reihen ausgerichteter Öffnungen (34, 39) aufweisen, die über rohrförmige Abschnitte (35, 40) abgedichtet verbunden sind, welche von gelochten Eingangs- oder Ausgangsröhren (36, 41) für Flüssigkeit und/oder Gas durchquert werden, wobei die Röhren einer gleichen Kategorie an einem Ende über eine Sammelleitung (38, 43) verbunden sind.

10. Anordnung nach einem der Ansprüche 1 bis 9, **dadurch gekennzeichnet**, daß die erste Wärme- und Stoffaustauschstruktur (26) aus einem geordneten Füllstoffabschnitt (26) besteht, der unmittelbar von den Endabschnitten (13) der Rippen (11) der Profilelemente (3) des Verteilers (1) getragen wird.

11. Anordnung nach Anspruch 10, dadurch gekennzeichnet, daß die erste Wärme- und Stoffaustauschstruktur (26) aus einem gewellt-gekreuzten Füllstoffabschnitt besteht.

12. Anordnung nach Anspruch 12, **dadurch gekennzeichnet**, daß die Platten des ersten Füllstoffabschnitts (26) senkrecht zu den Profilelementen (3) des Verteilers (1) stehen.

13. Wärme- und Stoffaustauschsäule, **dadurch gekennzeichnet**, daß sie mindestens eine Anordnung (1, 26) nach einem der Ansprüche 1 bis 12 aufweist, die in der Säule durch die Randeinfassung (2) des Verteilers (1) getragen wird.

14. Säule nach Anspruch 13, **dadurch gekennzeichnet**, daß sie mindestens einen unterhalb der Anordnung (1, 26) angeordneten, zweiten Füllstoffabschnitt (25) aufweist, wobei Streben (29) zwischen dem Verteiler (1) und dem benachbarten zweiten Füllstoffabschnitt (25) angeordnet sind.

15. Säule nach Anspruch 14, **dadurch gekennzeichnet**, daß der zweite Füllstoffabschnitt (25) gewellt-gekreuzt ist.

16. Säule nach Anspruch 14 oder 15, **dadurch gekennzeichnet**, daß die Streben (29) aus ausgerichteten Plattenelementen bestehen, die auf den Böden (10) der Profilelemente (3) des Verteilers (1) befestigt sind.

17. Verwendung einer Säule nach einem der Ansprüche 13 bis 16 zur Destillation von Luft.
